Europäisches Patentamt

European Patent Office

Office européen des brevets

(19)

(11) Numéro de publication: **0 169 759**
**B1**

(12) **FASCICULE DE BREVET EUROPEEN**

(45) Date de publication du fascicule du brevet: 25.04.90

(51) Int. Cl.⁵: **A 01 F 25/20,** A 01 D 34/02, F 26 B 1/00

(21) Numéro de dépôt: 85401250.7

(22) Date de dépôt: 21.06.85 ·

(60) Demande divisionnaire 89201807.8 déposée le 21/06/85.

(54) Perfectionnement au dispositif de chargement de désileuses distributrices.

(30) Priorité: 25.06.84 FR 8410181
21.11.84 FR 8418000
21.11.84 FR 8418001

(43) Date de publication de la demande:
29.01.86 Bulletin 86/05

(45) Mention de la délivrance du brevet:
25.04.90 Bulletin 90/17

(84) Etats contractants désignés:
AT BE CH DE FR GB IT LI LU NL SE

(56) Documents cités:
EP-A-0 013 058
EP-A-0 090 906
EP-A-0 102 437
DE-A-2 032 215
DE-A-2 142 163
DE-A-2 935 870
DE-B-2 301 977
DE-C-2 810 366
FR-A-1 430 701
FR-A-2 148 060
FR-A-2 174 338
FR-A-2 501 130
US-A-2 733 565
US-A-4 133 236

(73) Titulaire: ETABLISSEMENTS LUCAS G
B.P. 9 La Verrie
F-85130 La Gaubretière (FR)

(72) Inventeur: Lucas, Gustave
10 rue de la Croix du Marché La Verrie
F-85130 La Gaubretière (FR)
Inventeur: Lucas, Gérard
9 rue du Moulin La Verrie
F-85130 La Gaubretière (FR)

(74) Mandataire: Bouju, André et al
Cabinet Bouju 38 avenue de la Grande Armée
F-75017 Paris (FR)

Courier Press, Leamington Spa, England.

**Description**

La présente invention concerne un perfectionnement aux désileuses distributrices et plus particulièrement un perfectionnement au dispositif de chargement de ces désileuses.

Il existe différents types bien connus de dispositifs de chargement de désileuse. L'invention a trait aux dispositifs du genre constitués d'un bras articulé sur une benne, au bout duquel pivote un poussoir tranchant assurant une préhension du produit et faisant également office de porte pour obturer la section frontale de chargement de la benne.

L'emploi d'une simple griffe ne permet pas de tailler, dans le silo, des paquets de produits pour le bétail, en laissant un plan de coupe bien net sur le silo. En effet, la griffe arrache le produit ensilé et laisse un front incertain qui favorise la dégradation du produit.

On connaît de nombreux documents dans lesquels sont décrits des dispositifs permettant de découper les produits ensilés, commer par exemple le DE—A—2 935 870, le FR—A—2 148 060; ces dispositifs sont disposés à l'extrémité d'une des parois de la benne de prélèvement des produits et ils présentent l'inconvénient de rendre la benne totalement inutilisable en cas d'incident ou de panne au niveau du dispositif de coupe.

On connaît également une désileuse distributrice, du type remorque, décrite dans le FR—A—2 501 130, qui comporte un poussoir de chargement faisant office de porte pour obturer la partie frontale de chargement; la partie inférieure de ce poussoir est en outre prévue pour être munie d'un dispositif de coupe décrit dans le FR—A—2 500 998, c'est-à-dire un dispositif de coupe par chaîne sans fin munie de dents régulièrement espacées.

Ce dispositif de coupe par chaîne, mal protégé de l'action néfaste de la matière ensilée (corrosion, bourrage) est fragile et sujet à avaries. Il a de plus une forme peu pénétrante, qui est désavantageuse en service normal, et s'oppose même à l'utilisation du poussoir tranchant si le dispositif de coupe est à l'arrêt en raison d'une avarie.

On connaît encore d'après le FR—A—2 148 068, le EP—A—0090906, le EP—A—0102437, le DE—A—2 032 215, le DE—A—2 142 163, le DE—B—2 301 977 et le DE—C—2 810 366 des dispositifs de coupe pour ensilage ou produits analogues, comprenant un ou plusieurs panneaux sensiblement verticaux portant à leur bord inférieur un dispositif de coupe comportant U moins un élément denté mobile en va-et-vient. En déplaçant le ou les panneaux vers le bas dans un ensilage tout en actionnant en va-et-vient le ou les éléments dentés, on découpe verticalement un bloc d'ensilage.

Toutefois, ces dispositifs de coupe sont comme le précédent sensibles aux bourrages favorisant les avaries mécaniques et la corrosion.

De plus, il s'agit dans tous ces documents de dispositifs de coupe qui ne travaillent que relativement peu en flexion car le bloc d'ensilage ou analogue, une fois découpé, est ensuite manipulé par d'autres organes tels qu'une fourche qui a au préalable été enfoncée dans la base de l'ensilage. Ces dispositifs de coupe ne seraient pas adaptés à équiper le poussoir tranchant du FR—A—2 501 130 car ils ne résisteraient pas aux efforts de flexion très importants auxquels le poussoir tranchant est soumis lorsqu'il ramène le bloc coupé vers la benne pour fermer celle-ci.

Le but de l'invention est ainsi de proposer un dispositif de chargement pour désileuse, du type à poussoir tranchant, dans lequel le dispositif de coupe prévu à l'extrémité du poussoir tranchant soit de forme très pénétrante, très peu exposé aux bourrages et à la corrosion, et apte à supporter les efforts de flexion de l'amenée du produit vers l'intérieur de la benne.

L'invention visa ainsi, conformèment au FR—A—2 501 130, un dispositif de chargement pour désileuse, constitué d'un poussoir tranchant faisant office de porte et de moyen de chargement de la benne par son mouvement oscillant, pour obturer la section de chargement de la benne, ce poussoir tranchant, qui est supporté par un bras de manoeuvre articulé sur ladite benne, étant muni, à son bord inférieur, d'un dispositif de coupe muni de lames de coupe.

Suivant l'invention, le dispositif de chargement est caractérisé en ce que ces lames de coupe se composent de deux lames de couteaux, directement adossées l'une à l'autre, animées d'un mouvement alternatif contraire et s'étendant sur la largeur du poussoir tranchant; les lames étant sur leur hauteur partiellement enserrées entre deux guides qui prolongent et sont solidaires de la partie extrême inférieure dudit poussoir tranchant.

Ainsi, les lames sont tenues entre les guides, ce que leur permet de fléchir de manière contrôlée, dans la mesure où les guides fléchissent eux-mêmes. Même si une telle flexion des guides se produit, le guidage des lames reste assuré de manière très convenable par les deux guides. De plus, les guides protègent le dispositif de coupe contre l'intrusion de matières étrangères, et par conséquent contre la corrosion et les bourrages. La structure selon l'invention permet de donner au dispositif de coupe un profil particulièrement pénétrant, qui au surplus ne présente qu'un minimum d'aspérités. Par conséquent, l'invention résout non seulement certains problèmes, tels que la résistance à la flexion, qui sont spécifiques aux poussoirs tranchants, mais également d'autres problèmes tels que la pénétration dans l'ensilage et la résistance à la corrosion et aux bourrages, qui se posent dans tout dispositif de coupe pour ensilage ou matières analogues.

Selon un perfectionnement qui est également couvert de manière indépendante par la demande divisionnaire européenne no. 89201 807.8 issue de la présente demande, le dispositif de chargement de produits ensilés dans la benne de la désileuse distributrice, comporte sur au moins un flanc du poussoir tranchant, un disque rotatif de découpage latéral, tourant dans un plan vertical perpendiculaire au plan du dispositif de coupe contre le flanc du poussoir tranchant.

Selon une autre disposition de l'invention, le disque s'étend au plus près, au-dessus des lames ou au niveau de l'arête de coupe, son diamètre étant sensiblement égal au tiers de la longueur des lames.

Selon une autre disposition de l'invention, le disque est entraîné par un moteur hydraulique inséré dans l'épaisseur du poussoir tranchant, et plus particulièrement dans le montant latéral.

Selon une autre disposition, la périphérie du disque est tranchante, lisse ou avec une denture, et un contre-fer est disposé sur le montant du poussoir tranchant.

L'invention vise également à augmenter les prélèvements unitaires de produit dans le silo.

Selon l'invention, le poussoir tranchant est articulé sur un bras allongé, et comporte, disposées latéralement, des joues en forme de V pointé vers le bas, destinées à combler l'espace entre l'entrée de la benne et ledit poussoir tranchant lorsque ce dernier est en position de porte pour obturer ladite entrée de la benne.

Le dispositif selon l'invention comporte également des lames à dentures particulièrement adaptées, notamment aux produits ensilés du genre maïs et herbe et procurant une bonne pénétration dans le produit, avec un effort réduit. Les lames peuvent en particulier comporter des dents taillées en pointe et à double tranchant; un premier tranchant de découpage du produit formant, avec la surface du produit à découper, un angle d'attaque aigu et un deuxième tranchant de cisaillage formant avec la surface à découper, un angle d'attaque obtus.

Selon une disposition préférentielle de l'invention, le tranchant aigu fait un angle d'attaque compris entre 30 et 45°, et le tranchant obtus fait un angle d'attaque, compris entre 95 et 120°.

La course réelle des lames est de préférence de l'orde de deux fois l'espace entre deux dents.

Pour réduire sensiblement de moitié les efforts de découpage qui résultent de la longueur importante des lames, il est préféré, selon l'invention, que les lames soient pourvues, sur une moitié de leur longueur, de dents inclinées dans un sens et, sur l'autre moitié de leur longueur, de dents inclinées dans l'autre sens; que l'une des deux lames comporte des dents divergentes de part et d'autre de l'axe médian de la lame, les axes médians de ces dents étant sécants au-dessus du front de coupe; et que l'autre lame comporte des dents convergentes de part et d'autre de l'axe médian de la lame, les axes médians de ces dents étant sécants au-dessous du front de coupe.

Selon une autre disposition de l'invention, la lame à dents divergentes comporte, à mi-longueur et centrée sur l'axe médian, une dent centrale en forme de Y.

Selon une autre disposition de l'invention, la lame à dents concergentes comporte, à mi-longueur et centré sur l'axe médian, un espace vide, en forme de queue d'aronde entre les deux dentes situés de part et d'autre dudit axe médian.

Selon une autre disposition de l'invention, les lames de couteau peuvent être d'épaisseurs differentes; la lame la plus mince étant disposée du côté du front de coupe alors que la lame plus épaisse est du côté de la benne pour mieux résister aux efforts lors de l'introduction des produits dans ladite benne.

Toujours selon l'invention, on peut disposer deux lames relativement épaisses mais amincies par un taillage en biseau pour faciliter leur pénétration dans le silo.

L'invention sera mieux comprise à l'aide de la description et des dessins annexés, donnés à titre indicatif et dans lesquels:

—la figure 1 est une vue de profil, partielle d'un poussoir tranchant de désileuse selon l'invention;

—la figure 2 est une coupe agrandie, selon AA, de l'extrémité du poussoir tranchant;

—la figure 3 est une vue partielle de face du poussoir tranchant avec une partie de la face avant du caisson écorchée pour montrer les lames et leur entraînement;

—la figure 4 est une vue schématique de face d'un second mode de réalisation de l'entraînement des lames;

—la figure 5 est une vue de profil d'un poussoir tranchant selon l'invention comportant, en plus du système de coupe inférieur, un système de coupe latéral;

—la figure 6 est une vue partielle de face, d'un côté du poussoir tranchant;

—la figure 7 montre un silo, en vue de dessus, après le prélèvement par le poussoir tranchant, d'un paquet de produit ensilé;

—la figure 8 est une vue de face d'une denture pour le système de coupe situé à la partie basse du poussoir tranchant;

—la figure 9 est une vue de face d'une des deux lames selon l'invention;

—la figure 10 est une vue de face de l'autre lame;

—la figure 11 présente le profil agrandi de l'extrémité d'un lame de forte épaisseur.

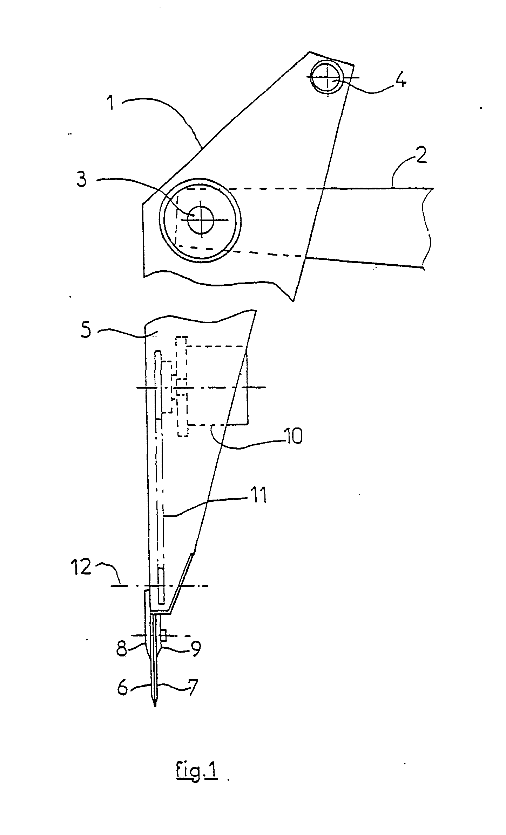

Tel que représenté, figure 1, le dispositif de chargement est constitué du poussoir tranchant 1 articulé sur le bras de manoeuvre 2 par l'intermédiaire de l'axe 3. Le mouvement du poussoir tranchant par rapport au bras est assuré de façon classique par un vérin non représenté articulé en 4 à l'extrémité supérieure du poussoir tranchant, au-dessus de l'axe 3. Le bras 2 est lui-même articulé sur la benne de la désileuse, non représentée.

Le poussoir tranchant 1 comprend un caisson 5 constitué d'éléments mécano-soudés; ce caisson, sous l'axe 3, a une section en forme de Vé très effilé et il fait office de porte pour obturer la section frontale de chargement de la benne de la désileuse, pendant les opérations de transport de produits tirés du silo et pendant la distribution de ces mêmes produits au bétail.

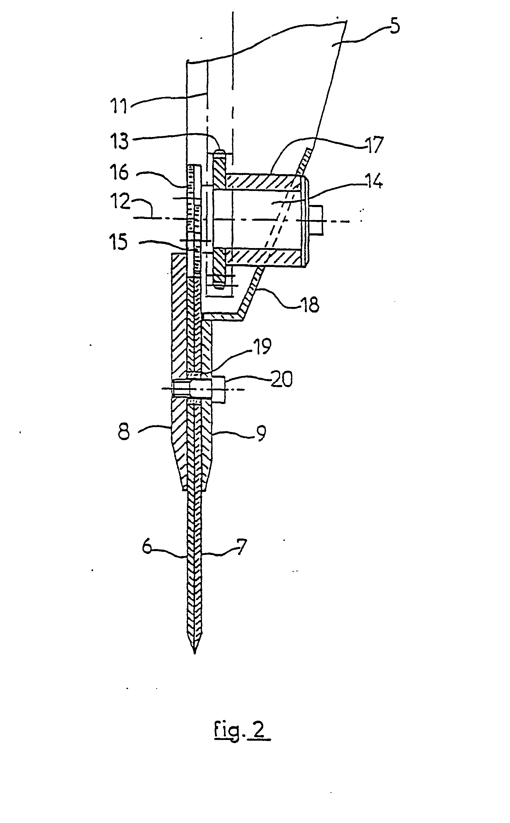

L'extrémité du caisson comporte deux lames 6 et 7 adossées l'une à l'autre; ces lames sont enserrées entre deux guides 8 et 9 biseautés qui prolongent la partie extrême du caisson. Les lames 6 et 7 sont animées d'un mouvement alternatif contraire au moyen d'un système de commande logé dans le caisson 1. Ce système de commande est constitué d'un moteur hydraulique 10 disposé dans la partie supérieure, plus large, du caisson, et d'une chaine de transmission 11 entre le moteur hydraulique 10 et l'organe de commande des lames 6 et 7; l'organe de commande desdites lames est centré sur l'axe 12, à la partie inférieure du caisson 1, au-dessus desdites lames. Le moteur hydraulique 10 est disposé à la partie supérieure du caisson pour pouvoir être logé totalement, ou presque, à l'intérieur dudit caisson. Le caisson constitué également un carter de protection de la chaine 11 entre le moteur hydraulique et le pignon 13 solidaire de l'arbre 14; cet arbre 14 constituant, avec les deux excentriques 15 et 16 l'organe de commande des lames, centré sur l'axe 12. L'arbre 14 tourillonne dans une douille 17 solidaire de la partie extrême 18 du caisson 5 et qui, sur la figure 2, dépasse légèrement sur la face interne du caisson 5. La partie extrême 18 du caisson est renfoncée pour soutenir la douille 17 d'une part, et les guides 8 et 9, d'autre part. Le guide 8 est fixé sur la paroi extérieure du caisson 5 et il est affiné et biseauté pour ne pas détériorer le front de coupe des lames 6 et 7. Le guide 9 est fixé sous la partie extrême 18 et il est effilé et biseauté comme le guide 8. Les deux guides sont maintenus écartés par des cales 19 qui assurent en même temps le guidage des lames 6 et 7, et il sont serrés sur lesdites cales au moyen de vis 20. L'assemblage des guides 8 et 9 doit être suffisamment résistant pour offrir une bonne tenue à la flexion lors de l'introduction des produits dans la benne de la désileuse.

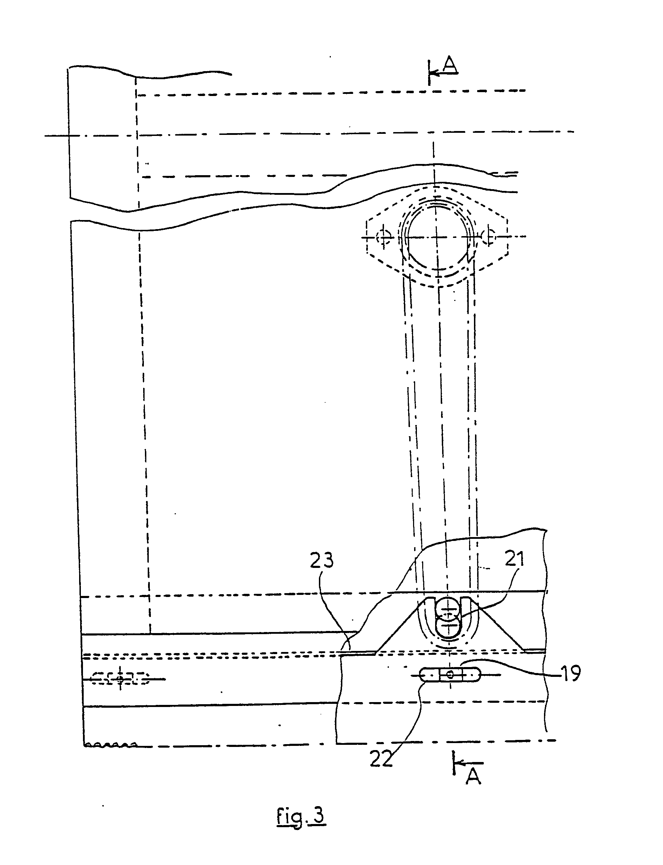

Les lames apparaissent dans la vue de face, fig. 3. Ces lames comportent, chacune, dans la partie centrale, une excroissance 21 munie d'une ouverture en forme de U, dans laquelle viennent se loger, respectivement, les excentriques 15 et 16 solidaires de l'arbre 14. Pendant leur mouvement alternatif, les lames 6 et 7 sont guidées par les cales 19 qui sont situées dans des lumières 22 ménagées dans le corps. Le nombre de cales 19 varie selon la largeur du poussoir tranchant. Les lames 6 et 7 peuvent également être en appui sous la bordure 23 de la partie extrême du caisson 5.

Les lames 6 et 7 one la même largeur que le poussoir tranchant et sont donc actives sur toute la largeur du poussoir tranchant; leur denture est adaptée au produit à désiler.

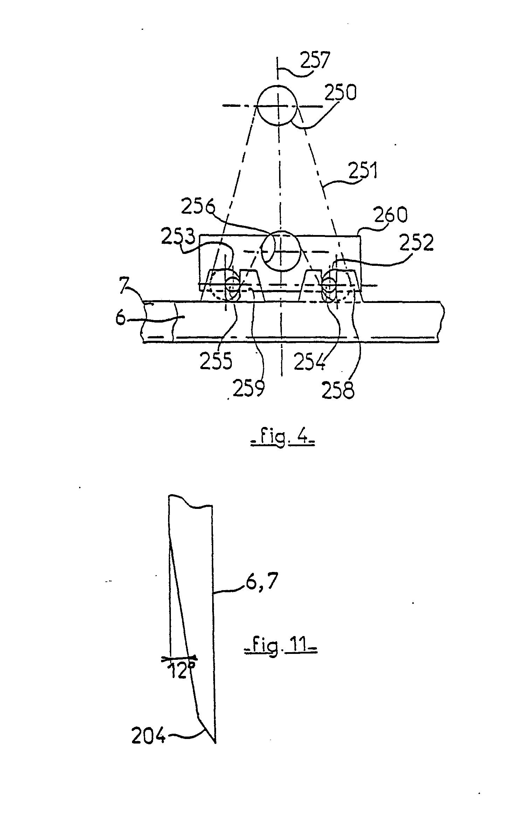

La figure 4 présente le système d'entrainement des lames 6 et 7 qui est logé dans l'épaisseur du poussoir tranchant 1.

Ce système d'entrainement est constitué d'un pignon moteur 250 entrainé par dispositif hydraulique, d'une chacine de transmission 251, de deux pignons 252 et 253 solidaires d'excentriques 254 et 255 et d'un pignon 256 d'enroulement de la chaine 251 sur les deux pignons 252 et 253. Les deux pignons 252 et 253 sont disposés de part et d'autre du plan 257 passant par l'axe du pignon moteur 250 et du pignon d'enroulement 256.

Les lames 6 et 7 comportent des guides 258 et 259, en forme de U, ouvert vers le haut, qui reçoivent les excentriques 254 et 255.

Pour faciliter le montage du système d'entrainement, il est prévu de fixer sur une même platine 260, les deux pignons 252 et 253 munis des excentriques et le pignon 256 d'enroulement. Cette disposition permet une intégration plus pratique du système sur le poussoir tranchant 1, mais aussi, le cas échéant, et selon les besoins, sur un montant latéral de la benne de la désileuse, afin de réaliser sur le côté, un front de coupe aussi net que celui qui est réalisé par le poussoir tranchant. Dans ce cas de montage latéral, on utiliserait bien entendu les dispositions constructives exposées en regard de la figure 1.

Les pignons 252 et 253 sont disposés en partie basse de la platine 260; le pignon d'enroulement 256 est disposé sensiblement au centre de la platine. L'espace entre les deux pignons 252 et 253 est du même ordre que le diamètre extérieur du pignon d'enroulement 256. L'épaisseur des pignons 252, 253 avec leurs excentriques 254, 255, est réduite au maximum pour permettre leur intégration dans la partie basse effilée du caisson du poussoir tranchant. La course de chaque lame 6 et 7, est sensiblement supérieure au pas de leur denture; en bout de course, les extrémités des lames 6 et 7 sont décalées d'une dimension sensiblement égale à deux fois le pas P, ce qui permet en fait, pour la découpe, un recouvrement relatif de deux dents, les unes par rapport aux autres.

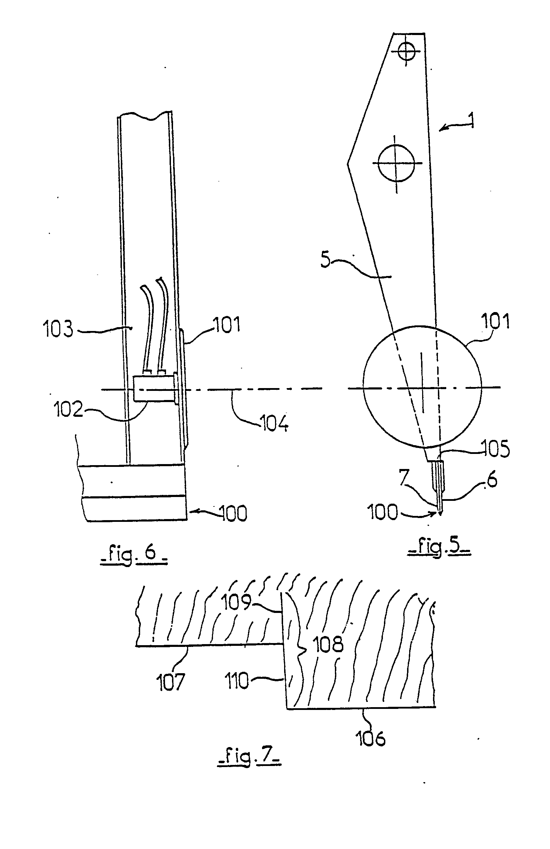

Le poussoir tranchant 1, représenté figure 5, comporte un disque rotatif 101 disposé latéralement en partie basse et contre le caisson 5. Le disque déborde largement de chaque côté du caisson 5, réalisant ainsi une découpe latérale verticale, de part et d'autre du plan de découpe frontal qui lui, est réalisé au moyen du couteau 100. Le disque 101 comporte, selon les produits ensilés, une périphérie lisse ou dentelée tranchante: la périphérie peut coopérer avec un contre-fer qui décrasse en permanence le disque dont la vitesse de rotation est de l'ordre de 200 tours/mn.

Le disque 101 est entrainé, directement, par un moteur hydraulique 102, figure 6, logé dans l'épaisseur du caisson 5 du poussoir tranchant 1. Ce moteur hydraulique 102 est plus particulièrement loge dans le montant latéral 103 de la griffe 1.

L'axe de rotation 104 du moteur hydraulique 102 et du disque 101 est disposé nettement au-dessus de la bordure supérieure 105 des lames 6 et 7, à une distance légèrement plus grande que le rayon du disque 101, pour éviter les interférences entre les extrémités des lames 6 et 7 et le disque 101. On peut toutefois placer la périphérie du disque 101 an niveau du tranchant de couteau 100; dans ce cas, les lames 6 et 7 ne doivent pas déborder du caisson 5.

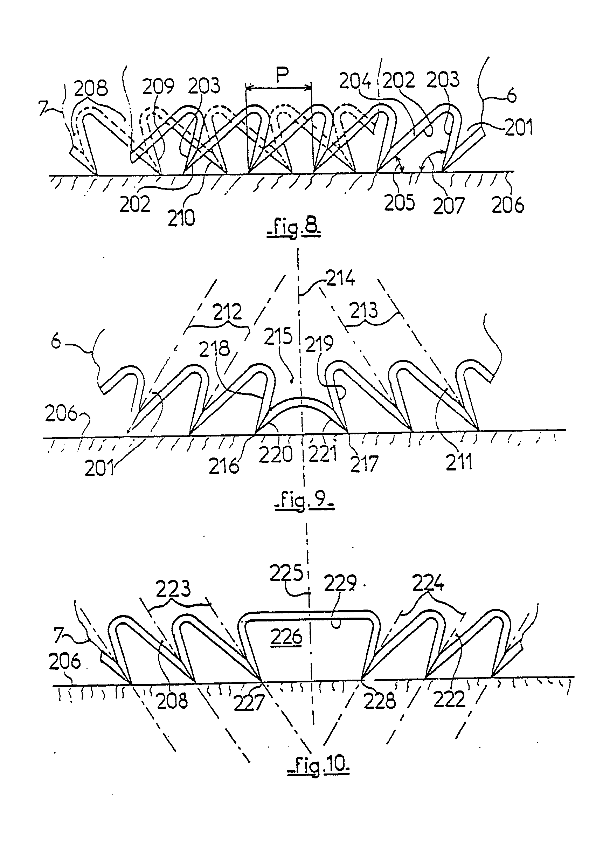

La figure 7 montre les fronts de coupe obtenus par le couteau 100, d'une part, et le disque 101 d'autre part, sur un silo 106 de produit du genre maïs ou herbe.

Le couteau 100 réalise un front de coupe 107 vertical dont la dimension est au mieux égale à la longueur dudit couteau 100. Le disque 101 réalise un front de coupe latéral 108, vertical et perpendiculaire au front de coupe 107 du couteau 100. Ce front de coupe latéral 108 se divise en deux parties: une partie que constitue une découpe d'atteinte dans le silo; elle n'apparait que sous la forme d'un trait 109, et une partie 110 qui constitue le front de coue latéral visible. Le front de coupe 108 a une dimension de l'ordre du diamètre du disque 101.

Le trait de découpe 110 visible sur le silo 106 correspond à la trace de la partie débordante du disque 101, en avant du caisson 5 du poussoir tranchant 1.

La combinaison du couteau 100 et du disque 101 permet le découpage de paquets de produit. On peut toutefois prélever, selon la course du poussoir tranchant 1, plusieurs paquets successifs, sans déplacer la benne.

La course du poussoir tranchant 1 peut être améliorée par un allongement du bras de manoeuvre 2; dans ce cas l'espace entre le poissoir tranchant et l'entrée de la benne est comblé par des joues latérales en forme de Vé pointé vers le bas, et disposées sur le poussoir tranchant, lorsque le poussoir tranchant est placé en position de porte pour obturer la benne.

La denture de la lame 6, présentée figure 8, est constituée de dents 201, à double tranchant 202 et 203, et elles sont taillées en pointe. La zone d'affutage 204 entre deux dents est continue et la pente de cette zone 204 est de l'ordre de 45°.

L'angle d'attaque 205 du tranchant de découpage 202, avec le front de coupe 206 du produit, est un angle aigu compris entre 30 et 45°; il est dans l'exemple de la figure 8, de l'ordre de 40°. L'angle d'attaque 207 du tranchant de cisaillage 203, avec le front de coupe 206, est un angle obtus comprise entre 95 et 120°; il est, dans l'exemple de la figure 1, de l'ordre de 105°. Compte-tenu de l'angle d'attaque obtus, la lame a tendance à s'avancer automatiquement dans le produit à découper.

Le pas P, entre deux dents consécutives, est sensiblement égal à la course C de la lame.

La denture de la lame 7 disposée au dos de la lame 6 est identique à celle de ladite lame 6. Les deux lames 6 et 7 sont mobiles, l'une par rapport à l'autre et se déplacent alternativement toutes deux, en sens contraire. Les dents 201 de la lame 6 et 208 de la lame 7 sont en sens inverse; elles permettent ainsi un cisailliage des produits entre les tranchants 203 et 209 des dents 201 et 208, respectivement.

En même temps que ce cisaillage, les dents 201 et 208 ont tendance à pénétrer dans le produit. Les tranchants 202 et 210 des dents 201 et 208, respectivement, assurent un simple découpage du produit.

· La figure 9 présente l'une des lames utilisées. Cette lame 6 comporte, sur une moitié de sa longueur, des dents 201 inclinées dans un sens et, sur l'autre moitié de sa longueur, des dents 211 identiques aux dents 201, sauf qu'elles sont inclinées dans l'autre sens.

Les dents 201 et 211 de la lame 6 sont divergentes; les axes médians 212 des dents 201 et les axes médians 213 des dents 211 sont sécants au-dessus du front de coupe 206 du produit. Ces dents 201 et 211 sont disposées symétriquement par rapport à l'axe médian 214 de la lame 6.

Centrée sur l'axe médian 214, on trouve une dent 215 en forme de Vé dont l'écartement, entre les deux pointes 216 et 217 est sensiblement égal à une fois et demi le pas P.

Cette dent 215 comporte, d'une part, deux tranchants 218 et 219 de cisaillage, symétriques, par rapport à l'axe médian 214 de la lame 6 correspondant au tranchant 203 et, d'autre part, deux portions de tranchant 220 et 221 correspondant au tranchant 202.

La figure 10 présente l'autre lame 7, utilisée en coopération avec la lame 6, figure 9; les deux lames 6 et 7 étant disposées dos à dos.

La lame 7 comporte, sur une moitié de sa longueur, des dents 208 inclinées dans un sens et, sur l'autre moitié, des dents 222 inclinées dans l'autre sens. Les dents 208 et 222 de la lame 7 sont convergentes; les axes médians 223 des dents 208 et les axes médians 224 des dents 222, sont sécants au-dessous du front de coupe 206 du produit. Les dents 208 et 222 sont disposées symétriquement par rapport à l'axe médian 225 de la lame 7.

Un espace vide 226 sépare, au centre, les dents 208 et 222, disposées à mi-longueur. L'écart entre les pointes 227 et 228 des dents 208 et 222 disposées au centre, est sensiblement égal à une fois et demi le pas P. L'espace vide 226 est en forme de queue d'aronde et l'arête supérieure 229 est tranchante également.

L'obtention des tranchants, sur les deux lames, résulte d'un taillage de l'ensemble des dents avec une fraise de forme qui réalise une pente de 45° sur la zone 204.

Il est apparu que selon l'épaisseur des lames, l'effort de coupe et l'effet des lames sur le front étaient très dissemblables. Les lames de faible épaisseur offrent une très bonne pénétration et laissent un front de coupe bien net; les lames de plus forte épaisseur, au-delà de 4 mm par exemple, demandent un effort plus important pour la pénétration et de plus elles ont tendance à comprimer les produits sur le front de coupe et ceux-ci, par la suite, se détachent par plaques ce qui, bien sûr, nuit à la bonne conservation desdits produits.

Il est cependant intéressant d'utiliser des lames épaisses compte-tenu du fait qu'elles subissent des efforts non négligeables en translation lorsque le produit est introduit dans la benne. Aussi il est possible d'utiliser une lame épaisse du côté de la benne et une lame plus mince du côté du front de coupe. Ainsi la lame 6 peut faire 4 mm d'épaisseur alors que la lame 7 fait 6 mm d'épaisseur par exemple. On peut également prévoir deux lames de forte épaisseur mais taillées en biseau, fig. 11, pour affiner leur partie basse. Le profil de chaque lame 6 ou 7 étant le suivant, à partir de la pointer: tout d'abord une pente sur la zone 204, qui résulte du taillage des dents à 45° puis, lorsque l'épaisseur est d'un tiers environ, c'est-à-dire de l'ordre de 2 mm, une pente plus douce selon un angle de l'ordre de 10 à 15° par rapport à la face verticale et de préférence de 12° comme indiqué sur la figure 11.

**Revendications**

1. Dispositif de chargement pour désileuse, constitué d'un poussoir tranchant (1) faisant office de porte et de moyen de chargement de la benne par son mouvement oscillant, pour obturer la section de chargement de la benne, ce poussoir tranchant, qui est supporté par un bras de manoeuvre (2) articulé sur ladite benne, étant muni, à son bord inférieur, d'un dispositif de coupe muni de lames de coupe, caractérisé en ce que ces lames de coupe se composent de deux lames (6, 7) de couteaux, directement adossées l'une à l'autre, animées d'un mouvement alternatif contraire et s'étendant sur la largeur du poussoir tranchant (1); les lames (6 et 7) étant sur leur hauteur partiellement enserrées entre deux guides (8 et 9) qui prolongent et sont solidaires de la partie extrême inférieure (18) dudit poussoir tranchant (1).

2. Dispositif de chargement pour désileuse selon la revendication 1, caractérisé en ce que le poussoir tranchant présente dans le sens de l'épaisseur une dimensions décroissant vers le dispositif de coupe.

3. Dispositif de chargement pour désileuse selon la revendication 2, caractérisé en ce que le poussoir tranchant (1) est constitué d'un caisson (5) dont la section, en coupe transversale, est de forme sensiblement triangulaire, lequel caisson se prolonge par les guides (8 et 9) biseautés qui enserrent les lames de coupe (6 et 7) effilées.

4. Dispositif de chargement pour désileuse selon la revendication 3, caractérisé en ce qu'il comporte, enfermé dans l'épaisseur du caisson de forme sensiblement triangulaire, le système de commande des lames (6 et 7).

5. Dispositif de chargement pour désileuse selon l'une quelconque des revendications 1 à 4, caractérisé en ce qu'il comporte des cales (19) serrées au moyen de vis (20) permettant, d'une part, le guidage des lames (6 et 7), lesquelles comportent des lumières (22) et, d'autre part, le maintien de l'écartement des guides (8 et 9).

6. Dispositif de chargement pour désileuse selon l'une quelconque des revendications 1 à 5, caractérisé en ce qu'il comporte, sur au moins un flanc du poussoir tranchant (1), un disque rotatif (101) de découpage latéral, tournant dans un plan vertical perpendiculaire au plan du dispositif de coupe à couteaux (100), contre le flanc dudit poussoir tranchant.

7. Dispositif de chargement pour désileuse selon la revendication 6, caractérisé en ce que le disque (101) est entraîné par un moteur hydraulique (102) inséré dans le caisson (5) et en particulier dans le montant latéral (103).

8. Dispositif de chargement pour désileuse selon l'une quelconque des revendications 6 ou 7, caractérisé en ce que le disque (101) est un disque tranchant lisse.

9. Dispositif de chargement pour désileuse selon l'une quelconque des revendications 6 ou 7, caractérisé en ce que le disque (101) est un disque tranchant muni d'une denture.

10. Dispositif de chargement pour désileuse selon l'une quelconque des revendications 8 ou 9, caractérisé en ce que le montant latéral (103) du poussoir tranchant (1) comporte un contre-fer coopérant avec le disque (101).

11. Dispositif de chargement pour désileuse selon l'une des revendications 6 à 10, caractérisé en ce que l'axe de rotation (104) du disque (101) est situé à une distance de la bordure supérieure (105) des lames (6 et 7), sensiblement supérieure au rayon dudit disque (101), positionnant ce dernier au-dessus des lames et évitant les interférences entre les extrémités desdites lames et le disque.

12. Dispositif de chargement pour désileuse selon l'une des revendications 6 à 10, caractérisé en ce que l'axe de rotation (104) du disque (101) est situé à une distance de l'arête tranchante du couteau (100) sensiblement égale au rayon dudit disque (101).

13. Dispositif de chargement pour désileuse selon l'une des revendications 6 à 12, caractérisé en ce que le diamètre di disque (101) est de l'ordre du tiers de la longueur du couteau (100).

14. Dispositif de chargement pour désileuse selon l'une des revendications 1 à 13, caractérisé en ce que les lames (6 et 7) sont mues respectivement au moyen de deux excentriques (15 et 16) solidaires d'un même arbre (14) disposé à la partie extrême (18) du caisson (5) au-dessus desdites lames.

15. Dispositif de chargement pour désileuse selon l'une des revendications 1 à 13, caractérisé en ce que le lames (6 et 7) sont mues par deux excentriques (254 et 255) disposés en opposition, sur des pignons respectifs (252, 253) solidaires d'une platine support (260) et écartés sur cette platine (260) de part et d'autre d'un plan (257) passant par l'axe du pignon moteur d'entraînement (250) et par l'axe du pignon d'enroulement (256) disposé sur ladite platine (260).

16. Dispositif de chargement pour désileuse, selon l'une quelconque des revendications 1 à 15, caractérisé en ce que le poussoir tranchant (1) est articulé sur un bras de manoeuvre (2) allongé, et comporte, latéralement, des joues en forme triangulaire pointée vers le bas, destinées à combler l'espace entre la benne et ledit poussoir tranchant, lorsque ce dernier est en position de porte.

17. Dispositif de chargement pour désileuse, selon l'une quelconque des revendications 1 à 16, caractérisé en ce que les lames (6 et 7) comportent des dents taillées en pointe et à double tranchant, un premier tranchant (202) de découpage du produit formant, avec la surface (206) du produit à découper, un angle d'attaque (205) aigu et un deuxième tranchant (203) de cisaillage du produit formant, avec la surface (206) du produit à découper, un angle d'attaque (207) obtus.

18. Dispositif de chargement pour désileuse, selon la revendication 17, caractérisé en ce que l'angle d'attaque (205) du tranchant de découpage (202) est compris entre 30 et 45°.

19. Dispositif de chargement pour désileuse, selon l'une quelconque des revendications 17 ou 18, caractérisé en ce que l'angle d'attaque (207) de tranchant de cisaillage (203) est compris entre 95 et 120°.

20. Dispositif de chargement pour désileuse, selon l'une quelconque des revendications 17 à 19, caractérisé en ce que l'angle d'attaque (205) du tranchant de découpage (202) est sensiblement égal à 40° et l'angle d'attaque (207) du tranchant de cisaillage (203) est sensiblement égal à 105°.

21. Dispositif de chargement pour désileuse, selon l'une des revendications 17 à 20, caractérisé en ce que les lames (6 et 7) comportent, sur une moitié de leur longueur, des dents inclinées dans un sens et, sur l'autre moitié de la longueur, des dents inclinées dans l'autre sens.

22. Dispositif de chargement pour désileuse, selon la revendication 21, caractérisé en ce qu'une première (6) des lames comporte des dents divergentes (201 et 211) de part et d'autre de l'axe médian (214) de ladite lame (6), les axes médians (212 et 213) desdites dents (201 et 211) étant sécants au-dessus du front de coupe (206), et en ce que l'autre lame (7) comporte des dents convergentes (208 et 222) de part et d'autre de l'axe médian (225) de ladite autre lame (7), les axes médians (223 et 224) desdites dents (208 et 222) étant sécants endessous du front de coupe (206).

23. Dispositif de chargement pour désileuse, selon la revendication 22, caractérisé en ce que la lame (6) à dents (201 et 211) divergentes, comporte, à mi-longueur et centrée sur l'axe médian (214) une dent centrale (215) en forme de Y.

24. Dispositif de chargement pour désileuse, selon la revendication 22, caractérisé en ce que la lame (7) à dents (208 et 222) convergentes, comporte à mi-longueur et centré sur l'axe médian (225), un espace vide (226) en forme de queue d'aronde.

25. Dispositif de chargement pour désileuse, selon l'une quelconque des revendications 1 à 24, caractérisé en ce que les lames (6 et 7) sont d'épaisseurs différentes, la lame (7) étant plus épaisse que la lame (6).

26. Dispositif de chargement pour désileuse, selon l'une quelconque des revendications 1 à 24, caractérisé en ce que les lames (6 et 7) comportent, à partir de la pointe, une pente sur la zone (204) qui résulte du taillage à 45° des dents et, lorsque l'épaisseur est d'un tiers environ, une pente plus douce selon un angle de l'ordre de 12°, réalisant une forme de biseau, affinée dans la partie basse des lames.

**Patentansprüche**

1. Ladevorrichtung für Siloentleerer, bestehend aus einem zum Versperren des Ladequerschnitts des Kübels bestimmten Schneidschieber (1), der durch seine oszillierende Bewegung als Tür und Lademittel für den Kübel dient, von einem an den Kübel angelenkten Manövrierarm (2) getragen ist, und an seinem unteren Rand eine mit Schneiden versehene Schneidvorrichtung aufweist, dadurch gekennzeichnet, daß die Schneiden aus zwei Messerschneiden (6, 7) bestehen, die direkt Rücken an Rücken liegen und zu einer gegenläufigen Hinundherbewegung angetrieben sind sowie sich über die Breite des Schneidschiebers (1) erstrekken, wobei die Schneiden (6 und 7) in ihrer Höhe teilweise zwischen zwei Führungen (8 und 9) eingespannt sind, welche den untersten Endabschnitt (18) des genannten Schneidschiebers (1) verlängern und mit diesem Endabschnitt verbunden sind.

2. Ladevorrichtung für einen Siloentleerer nach Anspruch 1, dadurch gekennzeichnet, daß der Schneidschieber in Richtung seiner Dicke eine in Richtung der Schneidvorrichtung abnehmende Abmessung aufweist.

3. Ladevorrichtung für Siloentleerer nach Anspruch 2, dadurch gekennzeichnet, daß der Schneidschieber (1) von einem Gehäuse (5) gebildet ist, dessen Querschnittsform im wesentlichen dreieckig ist, welches Gehäuse von den sich verjüngenden Führungen (8 und 9) verlängert ist, welche die dünnen Schneiden umschließen.

4. Ladevorrichtung für Siloentleerer nach Anspruch 3, dadurch gekennzeichnet, daß sie eingeschlossen in die Dicke des im wesentlichen dreieckigen Gehäuses das Steuersystem der Schneiden (6 und 7) umfaßt.

5. Ladevorrichtung für Siloentleerer nach einem der Ansprüche 1 bis 4, dadurch gekennzeichnet, daß sie mittels Schrauben (20) festgespannte Distanzstücke (19) umfaßt, die einerseits die Führung der mit Durchbrüchen (22) versehenen Schneiden (6 und 7) und andererseits die Wahrung des Abstands der Führungen (8 und 9) ermöglichen.

6. Ladevorrichtung für Siloentleerer nach einem der Ansprüche 1 bis 5, dadurch gekennzeichnet, daß sie auf mindestens einer Flanke des Schneidschiebers (1) eine drehbare Scheibe (101) für seitliches Schneiden umfaßt, die in einer Vertikalebene umläuft, senkrecht zur Ebene der Messerschneidvorrichtung (100), gegen die Flanke des genannten Schneidschiebers.

7. Ladevorrichtung für Siloentleerer nach Anspruch 6, dadurch gekennzeichnet, daß die Scheibe (101) von einem Hydraulikmotor (102) angetrieben ist, eingefügt in das Gehäuse (5) und insbesondere in die seitliche Strebe (103).

8. Ladevorrichtung für Siloentleerer nach Anspruch 6 oder 7, dadurch gekennzeichnet, daß die Scheibe (101) eine glattschneidende Scheibe ist.

9. Ladevorrichtung für Siloentleerer nach Anspruch 6 oder 7, dadurch gekennzeichnet, daß die Scheibe (101) eine mit Zähnen versehene schneidende Scheibe ist.

10. Ladevorrichtung für einen Siloentleerer nach einem der Ansprüche 8 oder 9, dadurch gekennzeichnet, daß die seitliche Strebe (103) des Schneidschiebers (1) eine mit der Scheibe (101) zusammenwirkende Gegenschneide umfaßt.

11. Ladevorrichtung für einen Siloentleerer nach einem der Ansprüche 6 bis 10, dadurch gekennzeichnet, daß die Drehachse (104) der Scheibe (101) sich in einem Abstand von der oberen Kante (105) der Schneiden (6 und 7) erstreckt, der deutlich größer ist als der Radius der genannten Scheibe (101), womit die letztere über den Schneiden positioniert wird und Interferenzen zwischen den Schneidenden und der Scheibe vermieden werden.

12. Ladevorrichtung für einen Siloentleerer nach einem der Ansprüche 6 bis 10, dadurch gekennzeichnet, daß die Drehachse (104) der Scheibe (101) sich in einem Abstand von der schneidenden Kante des Messers (100) befindet, der im wesentlichen gleich dem Radius der genannten Scheibe (101) ist.

13. Ladevorrichtung für Siloentleerer nach einem der Ansprüche 6 bis 12, dadurch gekennzeichnet, daß der Durchmesser der Scheibe (101) in der Größenordnung eines Drittels der Länge des Messers (100) ist.

14. Ladevorrichtung für einen Siloentleerer nach einem der Ansprüche 1 bis 13, dadurch gekennzeichnet, daß die Schneiden (6 und 7) jeweils mittels einer Exzenter (15 und 16) angetrieben sind, wobei beiden Exzenter mit ein und derselben Welle (14) verbunden sind, die am Endabschnitt (18) des Gehäuses (5) oberhalb der Schneiden angeordnet ist.

15. Ladevorrichtung für Siloentleerer nach einem der Ansprüche 1 bis 13, dadurch gekennzeichnet, daß die Schneiden (6 und 7) mittels zweier einander gegenüberliegender Exzenter (254 und 255) angetrieben sind, die auf zugeordneten Ritzel (252, 253) sitzen, die mit einer Trägerplatine (260) verbunden sind und auf dieser nach der einen bzw. anderen Seite bezüglich einer Ebene (257) versertzt sind, die durch die Achse des Antriebsritzel (250) und durch die Achse des auf dieser Platine (260) angeordneten Umschlingritzels (256) verläuft.

16. Ladevorrichtung für Siloentleerer nach einem der Ansprüche 1 bis 15, dadurch gekennzeichnet, daß der Schneidschieber (1) auf einem langgestreckten Manövrierarm (2) angelenkt ist und seitlich Wangen in Form eines nach unten weisenden Dreiecks aufweist, bestimmte zum Ausfüllen des Raumes zwischen dem Kubel und dem Schneidschieber, wenn dieser letztere sich in Türposition befindet.

17. Ladevorrichtung für Siloentleerer nach einem der Ansprüche 1 bis 16, dadurch gekennzeichnet, daß die Schneiden (6 und 7) angespitzte Zähne mit Doppelkanten umfassen, wobei eine erste Schneidkante (202) für die Silage mit deren Oberfläche (206) einen spitzen Winkel (205) bildet und eine zweite Abscherkante (203) mit der Oberfläche (206) des abzuschneidenden Silageprodukts einen stumpfen Angriffswinkel (207) bildet.

18. Ladevorrichtung für Siloentleerer nach Anspruch 17, dadurch gekennzeichnet, daß der Angriffswinkel (205) der Schneidkante (202) zwischen 30 und 45° liegt.

19. Ladevorrichtung für Siloentleerer nach einem der Ansprüche 17 oder 18, dadurch gekennzeichnet, daß der Angriffswinkel (207) der Abscherkante (203) zwischen 95 und 120° liegt.

20. Ladevorrichtung für Siloentleerer nach einem der Ansprüche 17 bis 19, dadurch gekennzeichnet, daß der Angriffswinkel (205) der Schneidkante (202) im wesentlichen gleich 40° ist und der Angriffswinkel (207) der Abscherkante (203) im wesentlichen gleich 105° ist.

21. Ladevorrichtung für Siloentleerer nach einem der Ansprüche 17 bis 20, dadurch gekennzeichnet, daß die Schneiden (6 und 7) auf einer Hälfte ihrer Länge in einer Richtung geneigte Zähne umfassen und auf der anderen Hälfte ihrer Länge Zähne, die in anderer Richtung geneigt verlaufen.

22. Ladevorrichtung für Siloentleerer nach Anspruch 21, dadurch gekennzeichnet, daß eine erste Schneide (6) divergierende Zähne (201 und 211) beidseits der Mittelachse (214) der genannten Schneide (6) aufweist, wobei die Mittelachse (212 und 213) der genannten Zähne (201 und 211) einander oberhalb der Schneidefront (206) schneiden und daß die andere Schneide (7) konvergierende Zähne (208 und 222) beidseits der Mittelachse (225) der genannten anderen Schneide (7) umfaßt, wobei die Mittelachsen (223 und 224) der genannten Zähne (208 und 222) einander unterhalb der Schneidefront (206) schneiden.

23. Ladevorrichtung für Siloentleerer nach Anspruch 22, dadurch gekennzeichnet, daß die Schneide (6) mit divergierenden Zähnen (201 und 211) auf halber Länge und zentriert auf die Mittelachse (214) einen zentralen Zahn (215) in Y-Form umfaßt.

24. Ladevorrichtung für Siloentleerer nach Anspruch 22, dadurch gekennzeichnet, daß die Schneide (7) mit konvergierenden Zähnen (208 und 222) auf halber Länge und zentriert auf die Mittelachse (225) einen Leerraum (226) in Form eines Schwalbenschwanzes aufweist.

25. Ladevorrichtung für Siloentleerer nach einem der Ansprüche 1 bis 24, dadurch gekennzeichnet, daß die Schneiden (6 und 7) unterschiedliche Dicke aufweisen, wobei die Schneide (7) dicker ist als die Schneide (6).

26. Ladevorrichtung für Siloentleerer nach einem der Ansprüche 1 bis 24, dadurch gekennzeichnet, daß die Schneiden (6 und 7) ausgehend von der Spitze eine Schräge auf der Zone (204) umfassen, die zu einer Zahnformgebung unter 45° führt und bei etwa einem Drittel der Dicke eine sanftere Schräge unter einem Winkel in der Größenordnung von 12° annimmt, unter Ausbildung einer im unteren Teil der Schneiden feineren Schräge.

## Claims

1. Loading apparatus for silo unloader, comprising a cutting pusher member (1) serving as a gate and as a means of loading the skip by its oscillating movement, in order to close off the loading section of the skip, this cutting pusher member which is supported by a manoeuvring arm (2) articulated on said skip being equipped, at its lower edge, with a cutting device equipped with cutting blades, characterised in that these cutting blades is comprised of two knife blades (6, 7) directly back to back with one another, driven by an opposite alternating movement and extending over the width of the cutting pusher member; the blades (6 and 7) being along their height partially clasped between two guides (8 and 9) which extend from and are integral with the lower end part (18) of said cutting pusher member (1).

2. Loading apparatus for silo unloader according to claim 1, characterised in that the cutting pusher member decreases in thickness towards the cutting device.

3. Loading apparatus for silo unloader according to claim 2, characterised in that the cutting pusher member (1) consists of a casing (5) the cross-sectional shape, of which is substantially triangular, said casing being extended by the bevelled guides (8 and 9) which encompass the tapered cutting blades (6 and 7).

4. Loading apparatus for silo unloader according to claim 3, characterised in that it has the control system of the blades (6 and 7) enclosed in the depth of the substantially triangular casing.

5. Loading apparatus for silo unloader according to any one of claims 1 to 4, characterised in that it comprises wedges (19) tightened by means of screws (20) allowing, on the one hand, the guiding of the blades (6 and 7) which have ports (22) and, on the other hand, the maintenance of the guides (8 and 9) at a distance from one another.

6. Loading apparatus for silo unloader according to any one of claims 1 to 5, characterised in that it comprises, on at least one side of the cutting pusher member (1) a laterally cutting rotating disc (101) turning in a vertical plane perpendicular to the plane of the knife cutting device (100), against the side of the said cutting pusher member.

7. Loading apparatus for silo unloader according to claim 6, characterised in that the disc (101) is driven by a hydraulic motor (102) inserted into the casing (5) and in particular in the lateral upright (103).

8. Loading apparatus for silo unloader according to any one of claims 6 or 7, characterised in that the disc (101) is a smooth cutting disc.

9. Loading apparatus for silo unloader according to any one of claims 6 or 7, characterised in that the disc (101) is a cutting disc equipped with teeth.

10. Loading apparatus for silo unloader according to one of claims 8 or 9, characterised in that the lateral upright (103) of the pusher member (1) comprises an iron cap cooperating with the disc (101).

11. Loading apparatus for silo unloader according to one of claims 6 to 10, characterised in that the axis of rotation (104) of the disc (101) is situated at a distance from the upper edge (105) of the blades (6 and 7), substantially greater than the radius of said disc (101), positioning the latter above the blades and avoiding the interferences between the ends of the said blades and the disc.

12. Loading apparatus for silo unloader according to one of claims 6 to 10, characterised in that the axis of rotation (104) of the disc (101) is situated at a distance from the cutting edge of the knife (100) substantially equal to the radius of said disc (101).

13. Loading apparatus for silo unloader according to one of claims 6 to 12, characterised in that the diameter of the disc (101) is of the order of a third of the length of the knife (100).

14. Loading apparatus for silo unloader according to one of claims 1 to 13, characterised in that the blades (6 and 7) are moved respectively by means of two eccentrics (15 and 16) integral with a single shaft (14) arranged at the end part (18) of the casing (5) above the said blades.

15. Loading apparatus for silo unloader according to one of claims 1 to 13, characterised in that the blades (6 and 7) are moved by two eccentrics (254 and 255) arranged in opposition, on respective pinions (254, 253) connected to a support plate (260) and separated on this plate (260) on either side of a plane (257) passing through the axis of the driving motor pinion (250) and through the axis of the winding pinion (256) arranged on the said plate (260).

16. Loading apparatus for silo unloader according to any one of claims 1 to 15, characterised in that the cutting pusher member (1) is articulated on an elongated manoeuvring arm (2), and comprises, laterally, triangular flanges with the point towards the bottom, intended to fill the space between the skip and the said cutting pusher member when the latter is in the gate position.

17. Loading apparatus for silo unloader according to any one of claims 1 to 16, characterised in that the blades comprise teeth cut in a point and having a double-edge, a first cutting edge (200) of the product forming, with the surface (206) of the product to be cut, an acute leading angle (205) and a second shearing edge (203) of the product forming, with the surface (206) of the product to be cut, an obtuse leading angle (207).

18. Loading apparatus for silo unloader according to claim 17, characterised in that the leading angle (205) of the cutting edge (202) is confined between 30 and 45°.

19. Loading apparatus for silo unloader according to either of claims 17 or 18, characterised in that the leading angle (297) of the shearing edge (203) is confined between 95 and 120°.

20. Loading apparatus for silo unloader according to any one of claims 17 to 19, characterised in that the leading angle (205) of the cutting edge (202) is substantially equal to 40° and the leading angle (207) of the shearing edge (203) is substantially equal to 105°.

21. Loading apparatus for silo unloader according to any one of claims 17 to 20, characterised in that the blades (6 and 7) have, on one half of their length, teeth inclined in one direction and, on the other half of the length, teeth inclined in the other direction.

22. Loading apparatus for silo unloader according to claim 21, characterised in that a first blade (6) comprises divergent teeth (201 and 211) on either side of the median axis (214) of the said blade (6), the median axes (212 and 213) of the said teeth (201 and 211) being secant above the cutting area (206), and in that the other blade (7) has convergent teeth (208 and 222) on either side of the median axis (225) of the said other blade (7), the median axes (223 and 224) of said teeth being secant below the cutting area (206).

23. Loading apparatus for silo unloader according to claim 22, characterised in that the blade (6) with diverging teeth (201 and 211) has, at half its length and centred on the median axis (214).

24. Loading apparatus for silo unloader according to claim 22, characterised in that the blade (7) with convergent teeth (208 and 222) has at half its length and centred on the median axis (225) an empty space (226) in the shape of a dovetail.

25. Loading apparatus for silo unloader according to any one of claims 1 to 24, characterised in that the blades (6 and 7) are of different thicknesses, the blade (7) being thicker than the blade (6).

26. Loading apparatus for silo unloader according to any one of claims 1 to 24, characterised in that the blades (6 and 7) have, from the point, a slope on the zone (204) which is a result of the 45° cutting of the teeth and, when the thickness is approximately one third, a gentler slope at an angle of the order of 12°, realising a bevel shape, sharpened in the lower part of the blades.

fig.1

fig. 2

2

fig.3

_fig. 4_

_fig. 11_

12°

_fig. 6_

_fig. 5_

_fig. 7_

_fig.8._

_fig.9_

_fig.10._